# EUROPEAN PATENT SPECIFICATION

(11) **EP 0 723 832 B1**
(45) Date of publication and mention of the grant of the patent: **26.04.2000**
(21) Application number: 96300565.7
(22) Date of filing: 26.01.1996
(51) Int. Cl.: B23H 7/04

(54) **Method of detecting breakage of wire electrode during wire electrical discharge machining**
Verfahren zum Nachweisen von Drahtbrüchen während Drahtschneidefunkenerosionsbearbeitung
Méthode de détection de la rupture du fil-électrode pendant l'usinage par électroérosion

(30) Priority: 27.01.1995 JP 3027295
(43) Date of publication of application: 31.07.1996
(73) Proprietor: FANUC LTD., Minamitsuru-gun, Yamanashi 401-05 (JP)
(72) Inventor: Murai, Masao, Room 10-103, Fanuc Manshonharimomi, Minamitsuru-gun, Yamanashi, 401-405 (JP); Sakurai, Akihiro, Fanuc Dai3virakaramatsu, Minamitsuru-gun, Yamanashi, 401-405 (JP); Kawahara, Akiyoshi, Room 6-110, Fanuc Mashonh., Minamitsuru-gun, Yamanashi, 401-405 (JP)
(74) Representative: Billington, Lawrence Emlyn

(56) References cited:
- EP-A- 0 551 520
- PATENT ABSTRACTS OF JAPAN vol. 004, no. 009 (M-089), 23 January 1980 & JP 54 147594 A (MITSUBISHI ELECTRIC CORP), 17 November 1979,

## Description

This invention relates to improvements in a method of detecting the breakage of a wire electrode during wire electrical discharge machining.

In case of machining by a wire electrical discharge machine, a wire electrode (hereinafter referred to simply as wire) is locally damaged to sometimes bring about breakage, if the machining conditions are inappropriately determined. When the wire is broken, the successive electrical discharge machining operation is made impossible. In this case, the electrical discharge machining operation should be interrupted to reset the wire.

If power supply voltage for machining is continuously applied to the wire, from which a front portion beyond a broken portion is disconnected, electric discharge continuously occurs between the wire and a workpiece, and another portion of the wire may be further broken. As a result, there is a possibility that a fragment of a certain length disconnected from the wire remains in the workpiece (i.e., occurrence of double breakage) and damages a machined surface of the workpiece. Since any external tensile force cannot be applied to the wire, from which the front portion is disconnected, unsatisfactory electrical contact is caused between the wire and an electrode on the side of a wire guide for applying power supply voltage for machining to the wire, and electrical discharge occurs between the electrode and the wire to cause a problem in that the electrode itself is worn out and so forth. Accordingly, the electrical discharge machining operation should be stopped as quickly as possible upon the breakage of the wire.

Incidentally, as one of generally-known means for detecting the breakage of a wire, the breakage of the wire is detected by mechanically detecting the reduction of tension or slacking of the wire with a limit switch or the like. However, according to this detection means, the period between the occurrence of wire breakage and the sensible reduction of tension or slacking of the wire and the time required for actuating the limit switch or the like cause a delay in the detection of wire breakage. Further, as another generally-known means for detecting the breakage of the wire, the breakage of the wire is detected by mounting a rotating speed detecting means on a pulley or the like included in a wire feed system and driven following the feed of the wire, and then detecting the reduction of rotating speed or stopped state of the pulley or the like with the rotating speed detecting means. However, according to another detection means described above, since the inertia rotation of the pulley or the like after the occurrence of wire breakage causes also a delay in detecting the reduction of rotating speed or stopped state of the pulley or the like, it is not possible to detect the breakage of the wire immediately after the occurrence of breakage.

Alternatively, wire breakage can be detected in dependence upon sensing discharge positions outside the workpiece thickness, as disclosed in EP-A-0 551 520.

It is an object of the present invention to overcome the disadvantages of the prior art and to provide a method of detecting the breakage of a wire on a wire electrical discharge machine, wherein the breakage of the wire is detected as quickly as possible to prevent double breakage of the wire, damage to a machined surface of a workpiece and undue wear of an electrode of the wire electrical discharge machine.

First and second aspects of the invention are set out in attached claims 1 and 4.

In view of a better demonstration of the characteristics, hereafter, as examples without any restrictive character, some preferred embodiments are described referring to the accompanying drawings, wherein:
Fig. 1 is a function block diagram schematically showing the constitution of hardware, i.e., an electrical discharge machine for carrying out a wire breakage detecting method as an embodiment of the present invention;
Fig. 2 is a timing chart showing output signals from components of the hardware shown in Fig. 1;
Fig. 3 is a function block diagram schematically showing the constitution of hardware, i.e., an electrical discharge machine for carrying out another breakage detecting method embodying the present invention;
Fig. 4 is a timing chart showing output signals from components of the hardware shown in Fig. 3;
Fig. 5 is a diagram showing a frequency in occurrence of discharge during wire electrical discharge machining and the point at which the application of power supply voltage for machining is automatically stopped upon the detection of wire breakage by a previously-considered mechanical detecting means; and
Fig. 6 is a waveform diagram showing respective waveforms of discharge voltage and discharge current according to electrical discharge machining.

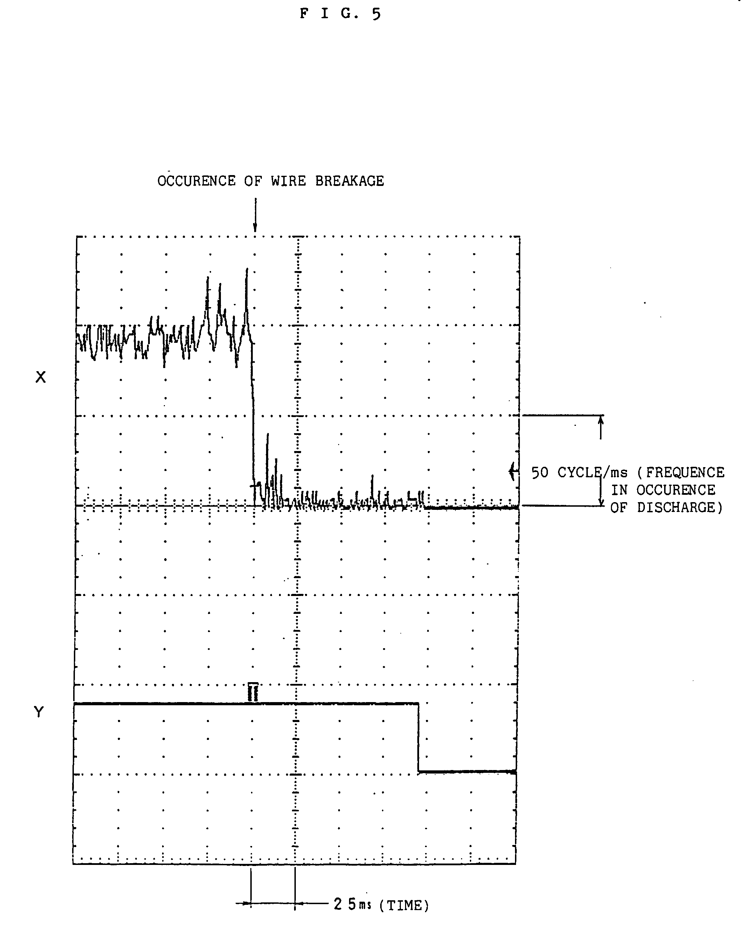

First, the general outline of embodiments of the present invention is explained below. Referring to Fig. 5, the horizontal axis represents the scale of the time, and is marked off every 25 ms. The vertical axis represents the scale of the frequency in occurrence of discharge, and is marked off every 50 cycle/ms.

According to the result of experiment in Fig. 5, it is found that the breakage of the wire occurs in the fourth block from the left in Fig. 5, and the frequency in occurrence of discharge up to the occurrence of wire breakage is approximately in the range of 80 to 130 cycle/ms. It is also found that the frequency in occurrence of discharge is reduced to 40 cycle/ms or below after the occurrence of wire breakage. Incidentally, since a mechanical wire breakage detecting means well known per se and mounted on an electrical discharge machine for experiment is operated to automatically stop the application of power supply voltage for machining after the lapse of about 100 ms since the occurrence of wire breakage, the frequency in occurrence of discharge settles down to 0 cycle/ms after the lapse of about 100 ms since the occurrence of wire breakage, as indicated on the scale Y.

As is obvious from the scale X in Fig. 5, the frequency in occurrence of discharge after the occurrence of wire breakage is far less than that before the occurrence of wire breakage when the power supply voltage for machining is continuously applied on the same condition as it is after the occurrence of wire breakage. As a result, it is possible to detect the breakage of the wire, as long as a sharp change (i.e., sharp drop) of the frequency in occurrence of discharge can be detected while the frequency in occurrence of discharge is monitored.

In an embodiment of a first aspect of the present invention, the frequency in occurrence of discharge in a predetermined period of time is counted periodically during wire electrical discharge machining. When the counted frequency is smaller than a predetermined reference value, the frequency in occurrence of discharge is considered to decrease due to the breakage of the wire, and the wire is then judged to be broken.

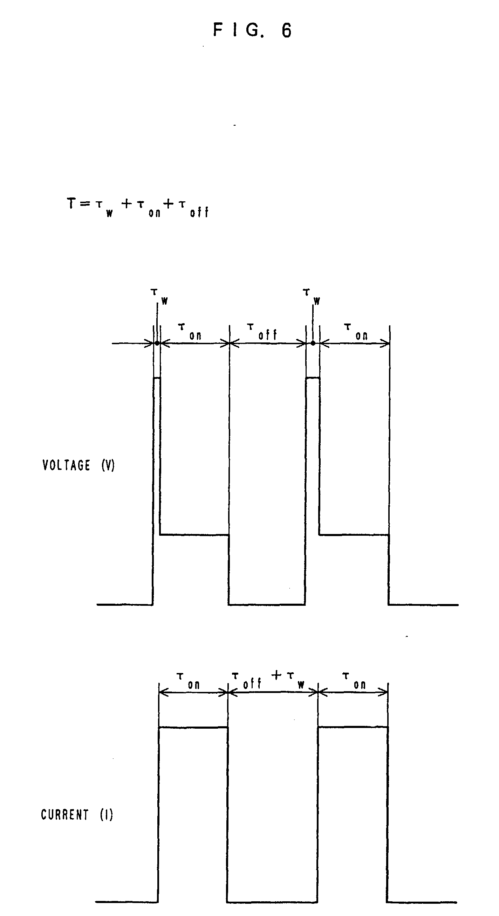

Fig. 6 shows wire electrical discharge machining operation, in which the application of power supply voltage for machining is interrupted periodically by alternately applying the power supply voltage for machining to induce discharge (discharge time: τ on), and interrupting the application of the power supply voltage for machining (interruption time: τ off). As shown in Fig. 6, the frequency in occurrence of discharge effective in identifying the wire breakage is the reciprocal of a time T required for one discharge cycle. When taking into consideration that the time T required for one discharge cycle is greatly influenced by the period of time (i.e., no-load voltage application time: τ w) between the start of the application of power supply voltage for machining and the occurrence of discharge, the increase of the no-load voltage application time τw can be regarded as the decrease of the frequency in occurrence of discharge.

In an embodiment of a second aspect of the present invention, the wire is judged to be broken when discharge is not detected until a predetermined period of time has elapsed since the application of power supply voltage for machining was started.

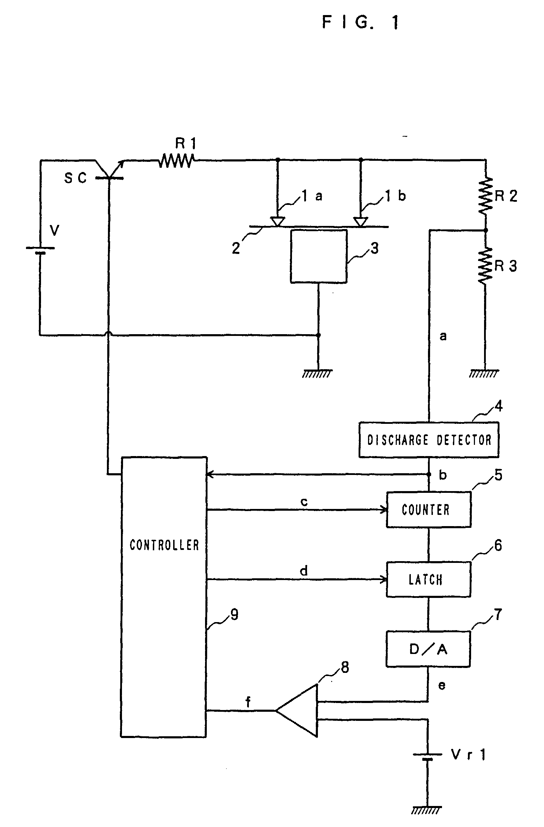

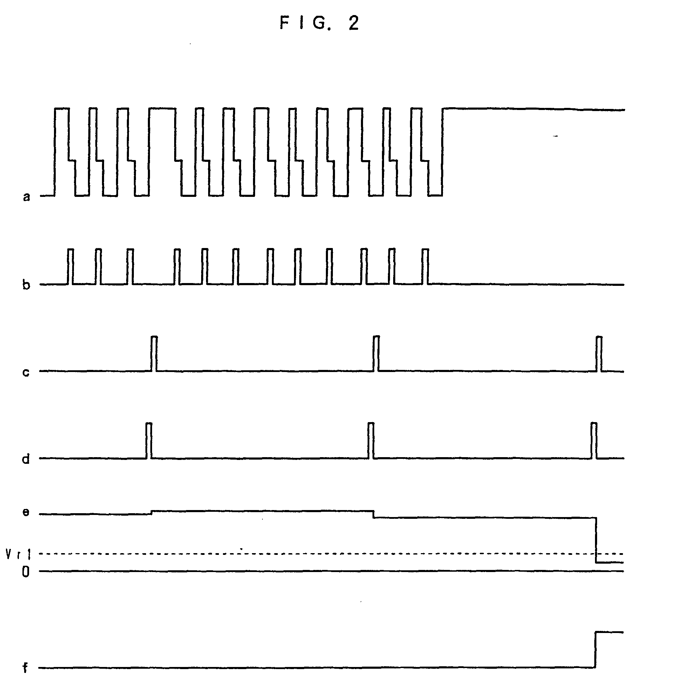

A detailed description will now be given of a first embodiment of the present invention with reference to Figs. 1 and 2.

Referring to Fig. 1, which shows the constitution of an electrical discharge machine for carrying out the first embodiment, power supply voltage for machining is intermittently applied from a DC power source V for machining to an interelectrode space defined by a wire 2 stretched between upper and lower electrodes 1a and 1b serving as wire guides and a workpiece 3 through a switching device SC and a current limiting resistor R1. The switching device SC is on-off controlled by a controller 9 of the wire electrical discharge machine. An interelectrode voltage is divided by resistors R2 and R3 and then detected by a discharge detector 4.

When the controller 9 closes the switching device SC, the power supply voltage for machining is applied across the wire 2 and the workpiece 3. Consequently, when the application of supply voltage causes a dielectric breakdown in the space between electrodes, discharge occurs to machine the workpiece 3 by breaking. The interelectrode voltage a divided by the resistors R2 and R3 drops, simultaneously with the occurrence of breakdown, i.e., discharge. Then, the discharge detector 4 detects the drop of the voltage a and outputs a discharge detection signal b to the controller 9. The controller 9 detects the occurrence of discharge in response to the discharge detection signal b, keeps the switching device SC in the closed state further for a predetermined period of time for electrical discharge machining, and then interrupts the application of power supply voltage for machining for a predetermined period of time by opening the switching device SC so as to restore the space between electrodes to its insulating state. These operations are carried out in one discharge cycle.

Subsequently, the discharge cycle described above is repeatedly carried out during machining. The wire electrical discharge machine of the present embodiment is extremely similar in function and constitution to the conventional wire electrical discharge machine to this point. Therefore, the relation between the variation of the interelectrode voltage a and the discharge detection signal b shown in Fig. 2 is similar to that in the conventional electrical discharge machining.

According to the embodiment, the discharge detection signal b is further outputted from the discharge detector 4 to a counter 5, which is then incremented in response to the discharge detection signal b. The controller 9 outputs a reset signal c to the counter 5, which is then reset to 0 in response to the reset signal c. A latch 6 temporarily latches the number of discharge cycles counted by the counter 5. Every time the latch 6 receives a latch signal d from the controller 9, the latch 6 latches the current number of discharge cycles counted by the counter 5, and outputs the same continuously. Fig. 2 shows the relation between the latch signal d and the reset signal c, which are outputted from the controller 9. As shown in Fig. 2, the latch signal d is slightly precedent to the reset signal c. The reset signal c and the latch signal d are outputted at a fixed period controlled by a divider or the like of a clock for controlling the operation of a microprocessor included in the controller 9.

Thus, the counter 5 counts cumulatively the number of discharge detection signals b, i.e., the number of discharge cycles inputted from the discharge detector 4 in a time interval from when one reset signal c from the controller 9 is inputted to the counter 5 until the subsequent reset signal c is inputted to the counter 5. As described above, since the latch signal d precedes slightly the reset signal c, a value outputted from the latch 6 indicates the number of discharge detection signals b counted by the counter 5 in a time interval from when the reset signal c just before the discharge detection signal is inputted to the counter 5 until the latch signal d just before the discharge detection signal is inputted to the latch 6. In short, the value outputted from the latch 6 indicates the number of discharge cycles detected in a predetermined period of time. The time interval between the reset signal c and the subsequent latch signal d should be set to be sufficiently longer (i.e., 1 ms or above, for instance) than the mean discharge cycle time, without being affected by the natural variation of the discharge cycle time during normal electrical discharge machining operation, or without causing a delay in the detection of wire breakage.

A D/A converter 7 converts the digital output from the latch 6 into analog output. The analog output e from the D/A converter 7 is applied to an input terminal of a comparator 8.

A reference power supply sets reference voltage Vᵣ₁ corresponding to a reference frequency in occurrence of discharge and applied to a reference input terminal of the comparator 8. The output f from the comparator 8 is held to Low level when analog output e ≧ Vᵣ₁. Then, the output f is changed to High level at a point of time when analog output e < Vᵣ₁.

Accordingly, as is evident from Fig. 2, the output f from the comparator 8 is held to Low level, when the analog output e corresponding to the number of discharge cycles detected in the predetermined period of time is not less than the reference voltage Vᵣ₁ corresponding to the reference frequency in occurrence of discharge. On the other hand, the analog output f is changed to High level when the number of discharge cycles falls below the reference frequency. Thus, the occurrence of wire breakage can be detected by the controller 9.

According to the wire breakage detecting method described above, it is not necessary to wait for the reduction of tension or slacking of the wire 2 and the actuation of the limit switch or the like, differently from a case of detecting the wire breakage with the limit switch. Further, the detection of wire breakage is not affected by the inertial motion of the wire feed system which causes the delay in the detection, differently from a case of detecting the wire breakage by detecting the reduction of rotating speed or stopped state of the driven pulley for stretching the wire 2. Therefore, the controller 9 can detect the wire breakage to open the switching device SC or stop the feed of the wire 2 or a table of the wire electrical discharge machine, substantially simultaneously with the occurrence of wire breakage. The maximum delay in the detection of wire breakage corresponds to the time interval (i.e., period of judging the occurrence of wire breakage) between the reset signal c and the subsequent latch signal d, and is about 1 ms at the longest. As is obvious from Fig. 5 showing the results of experiment, the method of the present embodiment can detect the wire breakage earlier than the conventional method shown by a graph Y by about 100 ms, i.e., four blocks on the time scale shown by the horizontal axis.

Incidentally, the output f from the comparator 8 sometimes goes up High level at a period of time immediately after the start of wire electrical discharge machining, since the frequency in occurrence of discharge is comparatively small in that period. In this case, the controller 9 ignores the wire breakage detection signal (i.e., the output f from the comparator 8) outputted in a predetermined period of time immediately after the start of electrical discharge machining. Since the normal frequency in occurrence of discharge is varied in dependence on machining conditions or the like, the reference voltage Vᵣ₁ serving as a criterion for judging the wire breakage is determined properly according to the machining conditions or the like.

The digital output from the counter 5 may be fed to the controller 9 as it is, and a judgment as to whether or not the wire is broken may be made by using software, instead of the pieces of hardware including the D/A converter 7 and the comparator 8 or the like. Although the method described above detects the frequency in occurrence of discharge by cumulatively counting the number of discharge detection signals b outputted from the discharge detector 4 within the predetermined period of time, an event that is detected a predetermined number of times in one discharge cycle, such as a voltage application start (or termination) or a voltage interruption start (or termination), may be counted to detect the frequency in occurrence of discharge.

However, such counting of the event of a voltage application start (or termination) or voltage interruption start (or termination) or the like is meaningless for detecting a wire breakage in case where the machining voltage source performs forcible on-off control of the application of a power supply voltage for machining at every predetermined period. Therefore, the method in the above case is applied only to an electric discharge machine including a machining power source, which applies power supply voltage for machining continuously to the wire, until arc discharge is started subsequent to the occurrence of dielectric breakdown.

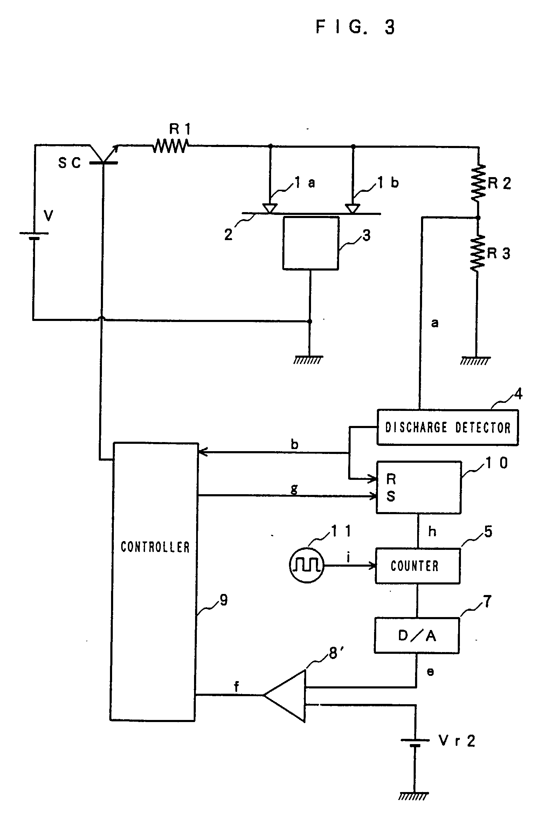

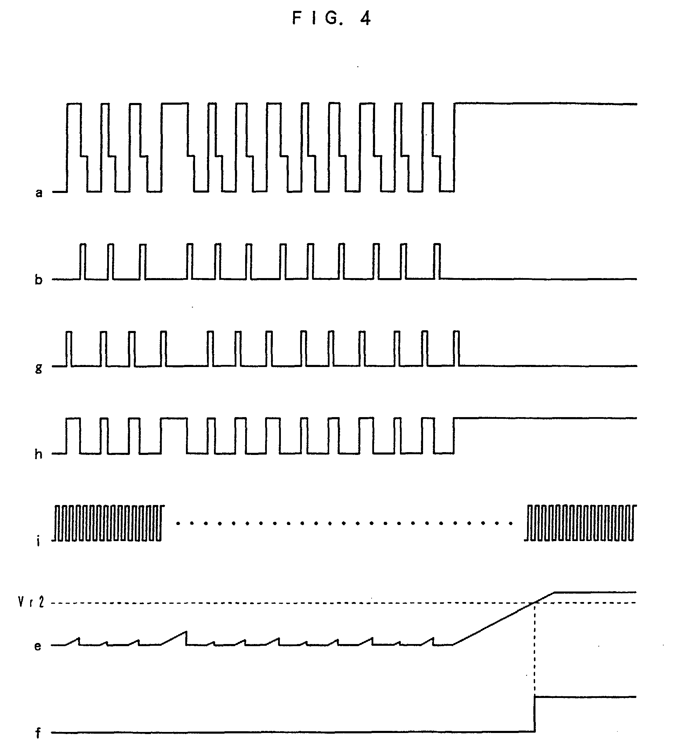

A detailed description will now be given of a second embodiment of the present invention with reference to Figs. 3 and 4.

In a wire electrical discharge machine for carrying out the method as the second embodiment shown in Fig. 3, the wire electrical discharge machine and a discharge detector 4 are similar in constitution to those in the first embodiment. In the second embodiment, the discharge detection signal b outputted from the discharge detector 4 is further fed to a reset terminal of an RS flip-flop 10. The RS flip-flop 10 is set in response to a set signal g outputted from the controller 9 at the start of application of power supply voltage for machining (i.e., ON timing of the switching device SC). The counter 5 counts pulses of a clock i generated from a reference clock generator 11 only while the output h from the RS flip-flop 10 is set. When the output h is reset, the counting operation is inhibited after initialization.

A D/A converter 7 converts the digital output from the counter 5 into analog output in real time. The analog output e from the D/A converter 7 is applied to an input terminal of a comparator 8'.

Referring to Fig. 4, the output h from the RS flip-flop 10 remains in the set state in the time interval from when the controller 9 outputs the set signal g until the controller 9 receives the discharge detection signal b from the discharge detector 4. Consequently, the counter 5 measures the time elapsed since the start of the application of power supply voltage for machining every each discharge cycle by counting the pulses of the clock i, and the D/A converter 7 outputs the analog output e corresponding to the elapsed time every moment.

A reference power source sets a reference voltage Vᵣ₂ corresponding to allowable latency time (i.e., a predetermined period of time) between the start of the application of power supply voltage for machining and the detection of discharge and applied to a reference input terminal of the comparator 8'. The output f from the comparator 8' is held to Low level when the analog output e ≦ Vᵣ₂. Further, the output f is changed to High level at a point of time when the analog output e> Vᵣ₂.

Accordingly, as shown in Fig. 4, the output f from the comparator 8' remains in the Low state when the analog output e corresponding to the period of time between the start of the application of power supply voltage for machining and the detection of discharge is equal to or below the reference voltage Vᵣ₂ corresponding to the allowable latency time. When any discharge is not detected, the output of discharge detection signal b for resetting the counter 5 through the RS flip-flop 10 is stopped. In this case, since the operation for resetting the counter 5 is stopped to increment the counter 5 infinitely, the analog output e exceeds the reference voltage Vᵣ₂ and the output f from the comparator 8' goes up High level. Thus, the occurrence of wire breakage can be detected by the controller 9.

In the second embodiment, similarly to the first embodiment, it is not necessary to wait for the reduction or tension or slacking of the wire 2 and the actuation of the limit switch or the like, and the detection of wire breakage is not affected by the inertial motion of the wire feed system which causes the delay in the detection. Thus, it is possible to detect the wire breakage substantially simultaneously with the occurrence of wire breakage. Although the maximum delay in detection is varied in dependence on the reference voltage Vᵣ₂, the maximum delay is far less than the cycle time of one ordinary discharge cycle, and the delay in the detection of wire breakage by the second embodiment is less than that by the first embodiment.

Incidentally, the output f from the comparator 8' sometimes goes up High level due to a comparatively long period of time between the start of the application of power supply voltage for machining and the occurrence of discharge in a period of time immediately after the start of wire electrical discharge machining. In this case, the controller 9 ignores the wire breakage detection signal (i.e., the output f from the comparator 8') outputted in the predetermined period of time immediately after the start of electrical discharge machining. Since the latency time between the start of the application of power supply voltage for machining and the detection of discharge in the normal state is varied in dependence on machining conditions or the like, the reference voltage Vᵣ₂ serving as a criterion for judging the wire breakage is determined properly according to the machining conditions or the like. Similarly to the first embodiment, the second embodiment may employ software for carrying out some functions of the hardware. However, in this case, the second embodiment requires processing speed higher than that in the first embodiment, and hence, the microprocessor in the controller 9 must have a suitable power for processing.

Furthermore, the discharge interval may be measured, instead of detecting the period of time between the start of the application of voltage and the occurrence of discharge. In this case, since the discharge interval is the reciprocal of the frequency in occurrence of discharge, the substantial principle of operation of the second embodiment is similar to that in the first embodiment.

Aspects of the present invention are not necessarily applied only to wire electrical discharge machines which detect the occurrence of discharge to regulate the time required for the application of power supply voltage for machining. The principle of operation of embodiments of the present invention is applicable as it is to any types of wire electrical discharge machines including the wire electrical discharge machine, in which the application of power supply voltage for machining is on-off controlled every each predetermined period, as long as the wire electrical discharge machine satisfies a fundamental condition that the frequency in occurrence of discharge decreases when the wire is broken.

As is apparent from the foregoing description, according to the method of detecting the breakage of the wire during wire electrical discharge machining, the wire is judged to be broken on the basis of the number of discharge cycles counted in a predetermined period of time or whether or not any discharge is detected until a predetermined period of time has elapsed since the start of the application of power supply voltage for machining, by using a fact that the frequency in occurrence of discharge after the occurrence of wire breakage in wire electrical discharge machining is reduced more than that before the occurrence of wire breakage. Thus, the method of the present invention enables the detection of wire breakage without substantial delay, which could not have been achieved by the conventional method that detects the occurrence of wire breakage by detecting mechanically the reduction of tension or slacking of the wire with the limit switch or the like, or by detecting the reduction of rotating speed or stopped state of the pulley or the like included in the wire feed system. Consequently, the wire electrical discharge machine can be stopped substantially simultaneously with the occurrence of wire breakage to prevent the double breakage of the wire, the damage to a machined surface of the workpiece and the undue wear of the electrode.

Embodiments of the present invention are by no means limited to those described as examples and shown in the accompanying drawings, but such a method which embodies the scope of the present invention as defined by the following claims may be realized in all kinds of forms.

## Claims

1. A method of detecting the breakage of a wire electrode during wire electrical discharge machining, in which a workpiece is machined by intermittently applying voltage across a wire electrode and the workpiece to repeatedly cause discharge, characterised by the steps of:
continuously or successively obtaining data on the frequency of consecutive occurrence of discharge in unit time during electrical discharge machining;
wherein said data on the frequency of consecutive occurrence of discharge in unit time represents the frequency of occurrence of discharge in a predetermined period of time sufficiently longer than the cycle time of a discharge cycle during normal electrical discharge machining, and the wire electrode is judged to be broken when the frequency of occurrence of discharge in the predetermined period of time is not more than a predetermined reference value.

2. A method of detecting the breakage of a wire electrode during wire electrical discharge machining according to claim 1, wherein the occurrence of discharge is detected on the basis of the variation of machining voltage applied across the wire electrode and the workpiece.

3. A method of detecting the breakage of a wire electrode during wire electrical discharge machining according to claim 1 or 2, wherein the data on the frequency of occurrence of discharge in the predetermined period of time obtained until a predetermined period of time has elapsed since the start of electrical discharge machining is excluded in judging the breakage of the wire electrode.

4. A method of detecting the breakage of a wire electrode during wire electrical discharge machining, in which a workpiece is machined by intermittently applying voltage across a wire electrode and the workpiece to repeatedly cause discharge, characterised by the steps of:
continuously or successively obtaining data on the frequency of consecutive occurrence of discharge in unit time during electrical discharge machining;
wherein the data on the frequency of consecutive occurrence of discharge in unit time represents the latency time between the start of the application of voltage and the occurrence of discharge, and the wire electrode is judged to be broken when the latency time exceeds a predetermined reference value.

5. A method of detecting the breakage of a wire electrode during wire electrical discharge machining according to claim 4, wherein the data on the latency time obtained until a predetermined period of time has elapsed since the start of electrical discharge machining is excluded in judging the breakage of the wire electrode.

6. A method of detecting the breakage of a wire electrode during wire electrical discharge machining according to claim 1, 2 or 3, wherein the data on the frequency of consecutive occurrence of discharge in unit time represents the discharge interval between the start of discharge in a preceding discharge cycle and the start of discharge in the succeeding discharge cycle, and the wire electrode is judged to be broken when the discharge interval exceeds a predetermined reference value.

## Patentansprüche

1. Verfahren zum Erfassen des Bruchs einer Drahtelektrode während einer elektrischen Entladungsdrahtschneidebearbeitung, bei der ein Werkstück durch intermittierendes Anlegen einer Spannung über eine Drahtelektrode und das Werkstück zum wiederholten Veranlassen einer Entladung bearbeitet wird, **gekennzeichnet** durch Schritte zum
ununterbrochenen oder aufeinanderfolgenden Gewinnen von Daten über die Häufigkeit des aufeinanderfolgenden Auftretens der Entladung in einer Zeiteinheit während der elektrischen Entladungsbearbeitung,
wobei die Daten über die Häufigkeit des aufeinanderfolgenden Auftretens der Entladung in der Zeiteinheit die Häufigkeit des Auftretens der Entladung in einer vorbestimmten Zeitperiode repräsentieren, die ausreichend länger als die Zykluszeit eines Entladungszyklus während einer normalen elektrischen Entladungsbearbeitung ist, und die Drahtelektrode als gebrochen beurteilt wird, wenn die Häufigkeit des Auftretens der Entladung in der vorbestimmten Zeitperiode nicht größer als ein vorbestimmter Referenzwert ist.

2. Verfahren zum Erfassen des Bruchs einer Drahtelektrode während einer elektrischen Entladungsdrahtschneidebearbeitung nach Anspruch 1, wobei das Auftreten der Entladung auf der Grundlage der Änderung der Bearbeitungs-Spannung, die über die Drahtelektrode und das Werkstück gelegt ist, erfasst wird.

3. Verfahren zum Erfassen des Bruchs einer Drahtelektrode während einer elektrischen Entladungsdrahtschneidebearbeitung nach Anspruch 1 oder 2, wobei die Daten über die Häufigkeit des Auftretens der Entladung in der vorbestimmten Zeitperiode, die gewonnen werden, bis eine vorbestimmte Zeitperiode seit dem Start der elektrischen Entladungsbearbeitung vergangen ist, beim Entscheiden über den Bruch der Drahtelektrode ausgeschlossen werden.

4. Verfahren zum Erfassen des Bruchs einer Drahtelektrode während einer elektrischen Entladungsdrahtschneidebearbeitung, bei der ein Werkstück durch intermittierendes Anlegen einer Spannung über eine Drahtelektrode und das Werkstück zum wiederholten Veranlassen einer Entladung bearbeitet wird, **gekennzeichnet** durch Schritte zum
ununterbrochenen oder aufeinanderfolgenden Gewinnen von Daten über die Häufigkeit des aufeinanderfolgenden Auftretens der Entladung in einer Zeiteinheit während der elektrische Entladungsbearbeitung,
wobei die Daten über die Häufigkeit des aufeinanderfolgenden Auftretens der Entladung in der Zeiteinheit die Latenzzeit zwischen dem Beginn des Anlegens der Spannung und dem Auftreten der Entladung repräsentieren und die Drahtelektrode als gebrochen beurteilt wird, wenn die Latenzzeit einen vorbestimmten Referenzwert überschreitet.

5. Verfahren zum Erfassen des Bruchs einer Drahtelektrode während einer elektrischen Entladungsdrahtschneidebearbeitung nach Anspruch 4, wobei die Daten über die Latenzzeit, die gewonnen werden, bis eine vorbestimmte Zeitperiode seit dem Start der elektrischen Entladungsbearbeitung vergangen ist, beim Entscheiden über den Bruch der Drahtelektrode ausgeschlossen werden.

6. Verfahren zum Erfassen des Bruchs einer Drahtelektrode während einer elektrischen Entladungsdrahtschneidebearbeitung nach Anspruch 1, 2 oder 3, wobei die Daten über die Häufigkeit des aufeinanderfolgenden Auftreten der Entladung in der Zeiteinheit das Entladungsintervall zwischen dem Beginn der Entladung in einem vorhergehenden Entladungszyklus und dem Beginn der Entladung in dem nachfolgenden Entladungszyklus repräsentieren und die Drahtelektrode als gebrochen beurteilt wird, wenn das Entladungsintervall einen vorbestimmte Referenzwert überschreitet.

## Revendications

1. Procédé pour détecter la cassure d'un fil-électrode lors d'un découpage par électroérosion à l'aide d'un fil, dans lequel une pièce à usiner est usinée en appliquant par intermittence une tension à travers un fil-électrode et à travers la pièce à usiner pour obtenir une décharge de manière répétée, caractérisé par les étapes consistant à:
obtenir en continu ou de manière successive des données concernant la fréquence d'événements consécutifs de décharge par unité de temps au cours du découpage par électroérosion à l'aide d'un fil;
dans lequel lesdites données concernant la fréquence d'événements consécutifs de décharge par unité de temps représentent la fréquence d'événements de décharge dans un laps de temps prédéterminé suffisamment plus long que le temps d'un cycle de décharge au cours d'un découpage normal par électroérosion à l'aide d'un fil, le fil-électrode étant considéré comme cassé lorsque la fréquence d'événements de décharge dans le laps de temps prédéterminé n'est pas supérieure à une valeur de référence prédéterminée.

2. Procédé pour détecter la cassure d'un fil-électrode au cours d'un découpage par électroérosion à l'aide d'un fil selon la revendication 1, dans lequel l'événement de décharge est détecté sur base de la variation de la tension d'usinage appliquée à travers le fil-électrode et à travers la pièce à usiner.

3. Procédé pour détecter la cassure d'un fil-électrode au cours d'un découpage par électroérosion à l'aide d'un fil selon la revendication 1 ou 2, dans lequel on exclut les données concernant la fréquence d'événements de décharge dans le laps de temps prédéterminé, obtenues jusqu'à ce qu'un laps de temps prédéterminé se soit écoulé depuis le début du découpage par électroérosion à l'aide d'un fil, lorsqu'on évalue la cassure du fil-électrode.

4. Procédé pour détecter la cassure d'un fil-électrode lors d'un découpage par électroérosion à l'aide d'un fil, dans lequel une pièce à usiner est usinée en appliquant par intermittence une tension à travers un fil-électrode et à travers la pièce à usiner pour obtenir une décharge de manière répétée, caractérisé par les étapes consistant à:
obtenir en continu ou de manière successive des données concernant la fréquence d'événements consécutifs de décharge par unité de temps au cours du découpage par électroérosion à l'aide d'un fil;
dans lequel les données concernant la fréquence d'événements consécutifs de décharge par unité de temps représentent le temps de latence entre le début de l'application d'une tension et l'événement de décharge, et le fil-électrode est considéré comme cassé lorsque le temps de latence dépasse une valeur de référence prédéterminée.

5. Procédé pour détecter la cassure d'un fil-électrode au cours d'un découpage par électroérosion à l'aide d'un fil selon la revendication 4, dans lequel on exclut les données concernant le temps de latence, obtenues jusqu'à ce qu'un laps de temps prédéterminé se soit écoulé depuis le début du découpage par électroérosion à l'aide d'un fil, lorsqu'on évalue la cassure du fil-électrode.

6. Procédé pour détecter la cassure d'un fil-électrode au cours d'un découpage par électroérosion à l'aide d'un fil selon la revendication 1, 2 ou 3, dans lequel les données concernant la fréquence d'événements consécutifs de décharge par unité de temps représentent l'intervalle de décharge entre le début de la décharge dans un cycle de décharge précédent et le début de la décharge dans le cycle de décharge suivant, le fil-électrode étant considéré comme cassé lorsque l'intervalle de décharge dépasse une valeur de référence prédéterminée.
